(19) Europäisches Patentamt
European Patent Office
Office européen des brevets

(11) Veröffentlichungsnummer: **0 301 376**
**A1**

# (12) EUROPÄISCHE PATENTANMELDUNG

(21) Anmeldenummer: **88111580.2**

(22) Anmeldetag: **19.07.88**

(51) Int. Cl.4: **C08K 5/44 , C08L 21/00 , C07C 145/02**

(30) Priorität: **29.07.87 DE 3725039**
**29.07.87 DE 3725041**

(43) Veröffentlichungstag der Anmeldung:
**01.02.89 Patentblatt 89/05**

(84) Benannte Vertragsstaaten:
**AT BE DE ES FR GB IT LU NL**

(71) Anmelder: **BAYER AG**
**Konzernverwaltung RP Patentabteilung**
**D-5090 Leverkusen 1 Bayerwerk(DE)**

(72) Erfinder: **Schubart, Rüdiger, Dr.**
**An der Engelsfuhr 27**
**D-5060 Bergisch-Gladbach(DE)**
Erfinder: **Eholzer, Ulrich, Dr.**
**Gerstenkamp 10**
**D-5000 Köln 80(DE)**
Erfinder: **Kempermann, Theo, Dr.**
**Fr.-Schmidt-Strasse 16a**
**D-5000 Köln 41(DE)**

## (54) Verfahren zur Vulkanisation von Kautschuk mit einem Vulkanisiersystem auf Basis von 2-Nitrophenylsulfenamiden, neue substituierte 2-Nitrophenylsulfenamide und Verfahren zu ihrer Herstellung.

(57) Mit einem Schwefelvulkanisiersystem enthaltend

a) Schwefel oder Schwefelspender,
b) Sulfenamidbeschleuniger konventioneller Art,
c) o-Nitrophenylsulfenamid und gegebenenfalls
d) übliche Vulkanisationshilfsmittel werden Kautschukvulkanisate mit verringerter Reversion zugänglich.

EP 0 301 376 A1

# Verfahren zur Vulkanisation von Kautschuk mit einem Vulkanisiersystem auf Basis von 2-Nitrophenylsulfenamiden, neue substituierte 2-Nitrophenylsulfenamide und Verfahren zu ihrer Herstellung

Die Erfindung betrifft ein Verfahren zur Vulkanisation von Kautschuken mit einem Vulkanisiersystem aus Schwefel bzw. Schwefelspender, einem Nitrogruppen-freien Sulfenamidbeschleuniger und einem o-Nitrophenylsulfenamid, gegebenenfalls in Gegenwart üblicher Vulkanisierhilfsmittel; neue substituierte 2-Nitrophenylsulfenamide und ein Verfahren zu ihrer Herstellung.

Das erfindungsgemäße Vulkanisationsverfahren erlaubt die Herstellung von Vulkanisaten mit verringerter Reversion.

Unter Reversion versteht man ein Wiederabfallen des Vernetzungsgrades und mechanischer Werte von Vulkanisaten (wie Zugfestigkeit, Weiterreißfestigkeit, Elastizität) bei einer Fortführung der Vulkanisation über das Optimum hinaus. Reversion tritt auf bei der Vulkanisation von Dien-Kautschuken, insbesondere Naturkautschuk und synthetischem Polyisopren bei hohen Vulkanisationstemperaturen bzw. langen Vulkanisationszeiten, wie sie bei der Herstellung voluminöser Artikel (z.B. LKW-Reifen) erforderlich sind. Da es bislang nicht möglich war, die Reversion wirksam zu begrenzen, mußte in vielen Fällen auf wirtschaftlich wünschenswerte hohe Vulkanisationstemperaturen verzichtet werden.

Eine Verringerung der Reversion war bisher nur in untergeordnetem Umfang möglich:

Man kann beispielsweise versuchen, die Reversion durch Verwendung von Vulkanisiersystemen mit verringertem Schwefelgehalt zu beeinflussen. Während bei der "Normal-Schwefel-Vulkanisation" Schwefel-Mengen von ca. 1,8 -2,5 phr (phr = Gew.-Teile, bezogen auf 100 Gew.-Teile Kautschuk) verwendet werden, arbeiten "Semi-Efficient-Systeme" mit Schwefel-Mengen von ca. 1 -1,8 phr und "Efficient-Systeme" mit Schwefel-Mengen von unter 1 phr. Im Vergleich zur Normal-Schwefel-Vulkanisation treten mit verringerten Schwefel-Mengen jedoch Nachteile hinsichtlich Rißbeständigkeit, Weiterreißfestigkeit, Abriebbeständigkeit und Cordhaftung der Vulkanisate auf, was die Verwendung von Vulkanisiersystemen mit erniedrigten Schwefel-Mengen auf bestimmte Kautschukartikel begrenzt. Es ist z.B. bei der Reifen-Herstellung nicht vertretbar, die Schwefel-Dosierung unter ca. 1,5 phr zu senken.

Es ist weiter bekannt, daß die Art der verwendeten Vulkanisationsbeschleuniger einen Einfluß auf die mögliche Reversion der Vulkanisate besitzt. Während Ultra-Beschleuniger, wie Dithiocarbamate, Thiurame sowie basische Beschleuniger, wie Diphenylguanidin, stärkere Reversion ergeben, verhalten sich Mercapto-Beschleuniger, wie Mercaptobenzothiazol, Dibenzothiazyldisulfid und das Zinksalz des Mercaptobenzothiazols, und Sulfenamid-Beschleuniger, wie Benzothiazyl-2-cyclohexylsulfenamid, Benzothiazyl-2-tert.-butylsulfenamid, N-Morpholinothio-2-benzothiazol und Benzothiazyl-dicyclohexylsulfenamid hinsichtlich der Reversion der Vulkanisate günstiger.

Für Dienkautschuke mit verringerter Reversion hat man in der Praxis oft Vulkanisiersysteme der folgenden Zusammensetzung eingesetzt:

a) Schwefel-Mengen von (ca. 0,8 - 1,8 phr) und

b) Sulfenamid-Beschleuniger in Mengen von ca. 1 -2 phr.

Jedoch ergeben auch derartige Vulkanisiersysteme bei hohen Vulkanisationstemperaturen (z.B. über 160 °C) bzw. langer Heizdauer Reversion in unerwünschtem Ausmaß.

Es ist ferner bekannt, daß die oben beschriebenen Vulkanisiersysteme mit einem Zusatz von Dithiophosphaten, wie Zinkdibutyldithiophospat, die Reversion von Vulkanisaten verringern (H. Ehrend; Gummi, Asbest, Kunststoffe; 3c (1977), S. 68 - 71). Diese Dithiophosphat-Beschleuniger verkürzen aber die Anvulkanisationszeit in unerwünschter Weise. Dies stellt einen Nachteil dar, weil eine ausreichende Verarbeitungssicherheit insbesondere bei den Anwendungsgebieten erforderlich ist, bei denen eine Verringerung der Reversion von besonderem Interesse ist, z.B. bei der Herstellung von LKW-Reifen und allgemein bei der Herstellung voluminöser Artikel.

Einige primäre Nitrophenyl-sulfenamide sind bekannt (US-Patent 2.382.813). Sie wirken jedoch als Vulkanisationsbeschleuniger allein nur schwach und ergeben keinen befriedigenden Vernetzungsgrad uns schlechte mechanische Werte der Vulkanisate (siehe Beispiel 1).

Konventionelle Sulfenamidbeschleuniger allein wie Benzothiazyl-2-cyclohexylsulfenamid (CBS), Benzothiazyl-2-tert.-butylsulfenamid (TBBS), N-Morpholinothio-2-benzothiazol (MBS) und Benzothiazyl-dicyclohexylsulfenamid (DCBS) ergeben mit normalen Schwefelmengen Vulkanisate mit zu hoher Reversion.

Aufgabe der Erfindung war es, ein Vulkanisiersystem bereitzustellen, das die Reversion der Kautschukvulkanisate verringert und gleichzeitig die Anvulkanisationszeit bei der Vulkanisation nicht verkürzt.

Überraschenderweise wurde gefunden, daß die Verwendung von Schwefel-Vulkanisiersystemen mit der Kombination von konventionellen Nitrogruppen-freien Sulfenamidbeschleunigern einerseits und substituierten o-Nitrophenylsulfenamiden andererseits zu Vulkanisaten mit besonders niedriger Reversion führt. Diese so erreichbare niedrige Reversion liegt bei einem für die Praxis günstigen Vernetzungsgrad weit unter der mit den Sulfenamid-Einzelkomponenten erzielbaren Reversion.

Gegenstand der Erfindung ist ein Verfahren zur Vulkanisation von Kautschuken unter Verwendung eines Schwefel-Vulkanisiersystems, dadurch gekennzeichnet, daß das Schwefel-Vulkanisiersystem

a) 1 bis 3 phr Schwefel oder
2 bis 6 phr Schwefelspender,

b) 0,3 bis 4 phr eines Nitrogruppen-freien Sulfenamidbeschleunigers aus der Reihe
Benzothiazyl-2-cyclohexylsulfenamid (CBS)
Benzothiazyl-2-tert.-butylsulfenamid (TBBS)
N-Morpholinothio-2-benzothiazol (MBS)
Benzothiazyl-2-diisopropylsulfenamid (DIBS)
Benzothiazyl-2-tert.-amylsulfenamid (AMZ)
Benzothiazyl-dicyclohexylsulfenamid (DCBS)
Morpholino-thiocarbamoyl-sulfenmorpholid (OTOS),

c) 0,5 bis 4 phr eines o-Nitrophenylsulfenamids aus der Reihe der Verbindungen mit den Formeln

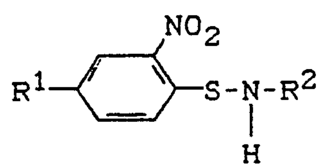
(I)

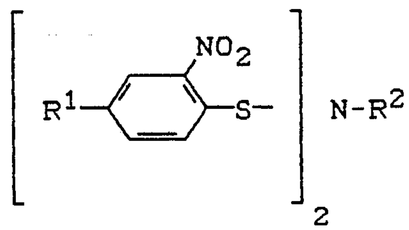
(II)

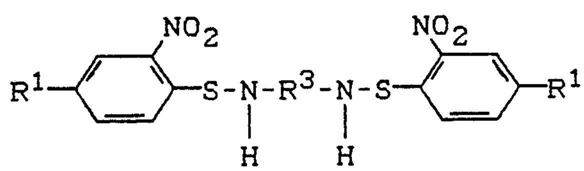
(III)

worin unabhängig voneinander
$R^1$ H, $NO_2$
$R^2$ lineares oder verzweigtes $C_1$-$C_6$-Alkyl, gegebenenfalls mit $C_1$-$C_4$-Alkyl substituiertes Phenyl, Trihalogen-$C_1$-$C_6$-alkyl, bevorzugt Trichlormethyl und Trifluorethyl; $C_5$-$C_{10}$-Cycloalkyl, gegebenenfalls substituiert mit $C_1$-$C_4$-Alkyl bzw. Trihalogenmethyl, z.B. Trifluormethyl;
$R^3$ $C_1$-$C_8$-Alkylen, $C_1$-$C_{10}$-Cycloalkylen, gegebenenfalls mit $C_1$-$C_4$-Alkyl oder Trihalogenmethyl substituiertes Arylen
bedeuten, und gegebenenfalls

d) übliche Vulkanisationshilfsmittel enthält.

Schwefelspender a) sind Verbindungen, die unter Vulkanisationsbedindungen Schwefel abspalten.

Bevorzugte Schwefelspender a) umfassen Dimorpholyldisulfid (DTDM), Tetramethylthiuramidisulfid (TMTD), 2-(4-Morpholinodithio)-benzothiazol (MBSS) und Caprolactamdisulfid.

Bevorzugte konventionelle Sulfenamidbeschleniger b) sind CBS, TBBS und MBS.

Bevorzugte o-Nitrophenylsulfenamide der Formel I umfassen Verbindungen mit folgenden Substituenten:

| | $R^1$ | $R^2$ |
|---|---|---|
| 1. | H | Methyl |
| 2. | H | Ethyl |
| 3. | H | n-Propyl |
| 4. | H | iso-Propyl |
| 5. | H | n-Butyl |
| 6. | H | tert.-Butyl |
| 7. | H | n-Amyl |
| 8. | H | iso-Amyl |
| 9. | H | tert.-Amyl |
| 10. | H | n-Hexyl |
| 11. | $NO_2$ | tert.-Butyl |
| 12. | H | Phenyl |
| 13. | H | o-Methylphenyl |
| 14. | H | 3-Trifluormethylphenyl |
| 15. | H | Cyclohexyl |
| 16. | H | 2-Methylcyclohexyl |
| 17. | H | 4-Methylcyclohexyl |
| 18. | H | 4-Trifluormethylcyclohexyl |

Bevorzugte o-Nitrophenylsulfenamide der Formel II umfassen Verbindungen mit folgenden Substituenten:

| | $R^1$ | $R^2$ |
|---|---|---|
| 19. | H | tert.-Butyl |
| 20. | H | Cyclohexyl |

Bevorzugte o-Nitrophenylsulfenamide der Formel III umfassen Verbindungen mit folgenden Substituenten:

| | $R^1$ | $R^2$ |
|---|---|---|
| 21. | H | 1,2-Ethylen |
| 22. | H | 1,4-Tetramethylen |
| 23. | H | 1,6-Hexamethylen |
| 24. | H | 1,2-Propylen |
| 25. | H | 2,4-Toluylen |
| 26. | H | 1,4-Cyclohexylen |

Vorzugsweise wird Verbindung 6 (o-Nitrophenyl-tert.-butylsulfenamid) verwendet.

Die substituierten o-Nitrophenylsulfenamide c) sind größtenteils bekannt. Sie lassen sich beispielsweise analog den Vorschriften aus Methoden der Organischen Chemie (Houben-Weyl), Band E 11, Georg Thieme Verlag, Stuttgart-New York 1985, S. 110-116, herstellen. Die anspruchsgemäßen substituierten o-Nitrophenylsulfenamide c) umfassen auch neue Verbindungen.

Weiterer Gegenstand der Erfindung sind daher o-Nitrophenysulfenamide der Formel

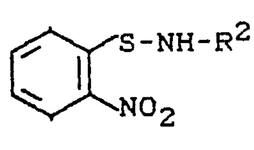

(IV)

dadurch gekennzeichnet, daß der Substituent $R^2$ tert.-Butyl, tert.-Amyl, 1,1,1-Trifluorethyl oder 4-Trifluormethylcyclohexyl ist.

Ein besonders wirtschaftliches Verfahren zur Herstellung dieser o-Nitrophenylsulfenamide IV sowie

anderer anspruchsgemäß zu verwendender o-Nitrophenylsulfenamide c) ist die Umsetzung des o-Nitrophenylsulfenylchlorids mit dem entsprechenden Amin in einem zweiphasigen System aus wäßriger Base und inertem organischem mit Wasser nicht mischbarem Lösungsmittel.

Weiterer Gegenstand der Erfindung ist daher ein Verfahren zur Herstellung der o-Nitrophenylsulfenamide c) aus o-Nitrophenylsulfenylchlorid

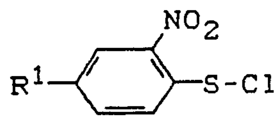

(V)

und Amin $R^2$-$NH_2$ bzw. Diamin $NH_2$-$R^3$-$NH_2$, wobei die Reste $R^1$ bis $R^3$ die oben angegebene Bedeutung besitzen,

dadurch gekennzeichnet, daß man eine Lösung des o-Nitrophenylsulfenylchlorids in einem inerten organischen mit Wasser nicht mischbaren Lösungsmittel in Gegenwart von

(I) 1 bis 1,1 Mol Amin $R^2$-$NH_2$ oder

(II) 0,5 bis 0,55 Mol Amin $R^2$-$NH_2$ oder

(III) 0,5 bis 0,55 Mol Diamin $NH_2$-$R^3$-$NH_2$ - jeweils pro Mol Sulfenylchlorid V -

und von wäßriger Lösung von 1 bis 10 val Alkali- oder Erdalkalihydroxid, -carbonat oder -hydrogencarbonat pro Mol abzuspaltendem Chlorwasserstoff

bei Temperaturen von -10 bis 40 °C, vorzugsweise von -10 bis 10 °C umsetzt, die organische Phase abtrennt und aus dieser das Sulfenamid c) isoliert.

Die wäßrige Lösung kann vorgelegt oder gleichzeitig mit der Sulfenylchloridlösung zum vorgelegten Amin gegeben werden. Es ist auch möglich, Amin und sulfenylchloridlösung der vorgelegten wäßrigen Lösung zuzusetzen.

Bevorzugte inerte organische Lösungsmittel umfassen beispielsweise Chlorbenzol, Dichorbenzol, Chloroform, Tetrachlormethan und Dichlordifluormethan.

Die o-Nitrophenylsulfenamide c) lassen sich aber auch aus den Sulfenylchloriden V, den Aminen $R^2$-$NH_2$ bzw. Diaminen $NH_2$-$R^3$-$NH_2$ mit tertiären Aminen als Säureakzeptoren in homogener Lösung herstellen.

Übliche Vulkanisationshilfsmittel d) sind beispielsweise Beschleunigeraktivatoren und Verzögerer.

Für das erfindungsgemäße Vulkanisationsverfahren geeignete Kautschuke sind Naturkautschuke, Synthesekautschuke, vorzugsweise solche auf Basis von halogenfreien Dienen, und deren Mischungen.

Bevorzugte Synthesekautschuke sind z.B.

Polyisoprene, Polybutadiene, Styrol/Butadien-Kautschuke, Nitrilkautschuke und deren Verschnitte.

Die Kautschuke können die üblichen Zusätze, wie Füllstoffe, insbesondere Ruße, Mineralöle, Weichmacher, Klebrigmacher, Beschleunigeraktivatoren, insbesondere Stearinsäure, Wachse, Alterungsschutzmittel, Ozonschutzmittel, Treibmittel, Farbstoffe, Pigmente, enthalten.

Füllstoffe, wie die in der Kautschuk verarbeitenden Industrie verwendeten Ruß-Sorten, weiterhin Kieselsäure, insbesondere feinteilige, in der Gasphase gewonnene Kieselsäure sowie hydrophobische Kieselsäure und feinteilige Metalloxide, einschließlich Mischoxide und Oxidgemische, sind wertvolle Mischungsbestandteile.

Die Einzelkomponenten der erfindungsgemäß zu verwendenden Vulkanisiersystems können den Kautschuken vor dem Vulkanisieren entweder getrennt oder in Form eines Gemisches oder einer Kautschuk/Beschleuniger-Vormischung (vgl.: Ullmann's Encyklopädie der technischen Chemie, 3. Auflage, Urgan & Schwarzenberg, München -Berlin 1957, Band 9, Seite 364) zugesetzt werden.

Die Vulkanisation der Kautschuke wird im allgemeinen bei Temperaturen zwischen 100 °C und 300 °C, bevorzugt bei 120 °C bis 240 °C, durchgeführt. Hierfür können alle in der Technik üblichen Vulkanisationsverfahren, wie Pressenheizung, Heizung mit Heißdampf, Heißluft, Salzbad, Fließbett, Ultrahochfrequenz und Dampfrohr, verwendet werden.

Die erfindungsgemäß zu verwendenden Vulkanisiersysteme weisen Vorteile hinsichtlich Reversion nach längerer Vulkanisationszeit und/oder hohen Vulkanisationstemperaturen auf (z.B. 45 Min. bei 180 °C). Die mechanischen Eigenschaften der Vulkanisate, wie Spannungswert, Zugfestigkeit, Bruchdehnung, Härte, Elastizität, Weiterreißfestigkeit, Zermürbungsbeständigkeit, Ermüdungsbeständigkeit, innere Wärmebildung (heat build up), dynamisches Fließen und Abrieb zeigen günstigere Werte als nach Verwendung konventioneller Vulkanisiersysteme.

## Beispiele

### Herstellungsbeispiele

N-tert.-Butyl-2-nitrophenylsulfenamid

770 g 2,2'-Dinitrodiphenyldisufid werden in 2 l Chlorbenzol bei 30 bis 40° C mit 180 g Chlor umgesetzt. Es wird 1 Stunde nachgerührt und anschließend das überschüssige Chlor im Vakuum entfernt. Die gesamte Lösung des Reaktionsproduktes 2-Nitrosulfenylchlorid wird dann zu 375 g tert.-Butylamin in 1200 ml Chlorbenzol bei -5 bis 10° C während 180 Minuten getropft. Nachdem die Hälfte des Sulfenylchlorids zugetropft ist, wird gleichzeitig eine Lösung von 275 g Natriumcarbonat in 800 ml Wasser während 90 bis 100 Minuten zum Reaktionsgemisch zugetropft. Nach 14-stündigem Nachrühren wird das Reaktionsgemisch mit 1000 ml Wasser verdünnt, filtriert und die Chlorbenzolphase separiert. Letztere wird mit Wasser gewaschen und im Vakuum eingedampft. Das zunächst noch flüssige Produkt wird zur Abühlung auf ein Blech gegossen. Während der Abkühlung tritt Kristallisation des Produktes ein. Man erhält 1047 g Sulfenamid vom Schmelzpunkt 44 bis 46° C. Der Schmelzpunkt der aus Petrolether/Isopropanol 1:1 umkristallisierten Substanz beträgt 49° C.

### Vulkanisierbeispiele

Liste der Testmethoden:

Vulkameter    Bayer-Vulkameter, Aufheizung jeweils 1 Min.
Meßbereich 3/20mV
$t_s(30)/130°$ C(Min.)    Anvulkanisationszeit aus Vulkametermessung bei 130° C bzw. 160° C, Zeit bis zum Anstieg der Schubmodulkurve um 30 mm über das Minimum; bei $t_s(15)$ um 15 mm über das Minimum
$t_{90}$(Min.)    Ausheizzeit, Zeit bis zum Erreichen von 90 % des maximalen Schubmoduls (Bayer-Vulkameter)
Stufenheizung    4 mm Klappen, Pressenheizung
$M_{300}$(MPa)    Spannungswert bei 300 % Dehnung, DIN 53 504
F (MPa)    Zerreißfestigkeit, DIN 53 504, Normring R 1
D (%)    Bruchdehnung, DIN 53 504, Normring R 1
H (Shore A)    Härte Shore A, DIN 53 504, Normring R 1
E (%)    Rückprallelastizität, DIN 53 512, 4 mm Klappe
Reversion (%)    aus Stufenheizung:

$$\left[1-\frac{M_{300}\text{ nach 45 Min./180}^0\text{ C}}{M_{300}\text{-maximum bei 150}^0\text{ C}}\right]\text{x 100}$$

### Beispiel 1

In einem Innenmischer wurde aus folgenden Bestandteilen eine Kautschukvormischung angefertigt:
Naturkautschuk    100,0 phr
Ruß N 330    55,0 phr

Aromat. Mineralöl 3,0 phr
Stearinsäure 2,5 phr
Ozonschutzwachs 1,0 phr
IPPD[1] 2,5 phr
TMQ[2] 1,5 phr
Zinkoxid 5,0 phr

[1] N-Phenyl-N′-isopropyl-p-phenylendiamin
[2] polymerisiertes 2,2,4-Trimethyldihydrochinolin

Aus einem Laborwalzwerk wurden folgende Bestandteile nachgemischt (vergl. Tabelle 1):

System 1:

Schwefel 1,42 phr
MBS 1,2 phr

System 2:

Schwefel 1,42 phr
MBS 4,0 phr

System 3:

Schwefel 1,42 phr
o-Nitrophenyl-tert,-butylsulfenamid 4,0 phr

System 4:

Schwefel 1,42 phr
MBS 2,0 phr
o-Nitrophenyl-tert.-butylsulfenamid 2,0 phr

System 1 ist ein gebräuchliches semi-efficient-Vulkanisiersystem aus Schwefel und MBS. Es ergibt nach Übervulkanisation bei 180° /45 Min. eine relativ hohe Reversion (siehe Tabelle 1).

System 2 besteht ebenfalls nur aus Schwefel und dem konventionellen Sulfenamidbeschleuniger MBS in hoher Dosierung. Die Dosierung von 4 phr MBS ist für praktische Zwecke zu hoch und führt zu zu starker Vernetzung, sie soll jedoch den Vergleich mit System 4 ermöglichen und enthält deshalb die gleiche Beschleunigermenge wie die Summe der Beschleunigermengen in System 4.

System 2 ergibt eine geringere Reversion als System 1.

System 3 enthält neben Schwefel nur o-Nitrophenyl-tert.-butylsulfenamid, ebenfalls in einer Menge von 4 phr. Hier tritt keine Reversion auf, da dieser Beschleuniger auch bei 180° C noch eine langsame Nachvernetzung bewirkt; jedoch ist der so erhaltene Vernetzungsgrad ungenügend und deutlich niedriger als z.B. mit 1,2 phr MBS (System 1).

System 4 ergibt eine deutlich niedrigere Reversion als die Systeme 1, 2 und 3 bei einem Vernetzungsgrad, wie er für die Praxis günstig ist (etwa entsprechend dem praxisgerechten System 1) und eine Anvulkanisationszeit, die ebenfalls praktisch gleich ist wie in System 1. Aus Tabelle 1 ist ferner ersichtlich, daß das erfindungsgemäße System 4 eine günstigere Ausvulkanisationszeit $t_{90}$ bei 150° C besitzt als die Systeme 1, 2 und 3 und auch eine kürzere Reaktionszeit $t_{90}-t_s$ aufweist als alle anderen Systeme. Der Spannungswert bei 180° C/45 Min. liegt deutlich höher als bei anderen Systemen.

Beispiel 2

zeigt die Überlegenheit eines erfindungsgemäßen Systems 2 gegenüber einem System 1, das zur Verringerung der Reversion Zinkdibutyldithiophosphat (ZBPD) enthält. Die Kautschukvormischung wurde wie in Beispiel 1 angegeben hergestellt und folgende Bestandteile auf einem Laborwalzwerk nachgemischt:

System 1:

Schwefel 1,42 phr
MBS 0,60 phr
ZBPD 1,20 phr

System 2:

Schwefel 1,42 phr
MBS 1,50 phr
o-Nitrophenyl-tert.-butylsulfenamid 2,0 phr

| | System 1 | System 2 |
|---|---|---|
| Reversion (%) nach 45 Min. 180 °C | 28 | 4,5 |
| Anvulkanisationszeit $t_s$ bei 130 °C (Min.) | 10,7 | 23,7 |

Das erfindungsgemäße System 2 gibt nicht nur eine weit niedrigere Reversion, sondern auch deutlich verbesserte Anvulkanisationsbeständigkeit.

Beispiel 3

zeigt einen Vergleich zwischen einem System (1), das außer Schwefel nur TBBS enthält und dem erfindungsgemäßen System (2) aus Schwefel, TBBS und o-Nitrophenyl-tert.-butylsulfenamid. Die Systeme 1 und 2 wurden auf etwa gleichen Spannungswert und Härte eingestellt.

System 1:

Schwefel 1,425 phr
TBBS 1,2 phr

System 2:

Schwefel 1,425 phr
TBBS 1,7 phr
o-Nitrophenyl-tert.-butylsulfenamid 2,0 phr

| | System 1 | System 2 |
|---|---|---|
| Reversion (%) nach 45 Min., 180° C | 34,5 | 3 |
| Anvulkanisationsbeständigkeit $t_s$/130° C (Min.) | 14,8 | 14,0 |
| Ausvulkanisationszeit $t_{90}$/150° C (Min.) | 8,0 | 7,5 |
| F nach 30 Min./150° C | 24,8 | 23,3 |
| D | 475 | 445 |
| $M_{300}$ | 16,2 | 15,9 |
| H | 68 | 68 |
| E | 40 | 40 |
| F nach 45 Min./180° C | 17,7 | 18,3 |
| D | 475 | 370 |
| $M_{300}$ | 10,6 | 15,6 |
| H | 63 | 69 |
| E | 34 | 35 |

System 2 zeigt deutlich niedrigere Reversion bei fast gleicher Anvulkanisationsbeständigkeit wie System 1, ferner gibt System 2 nach Übervulkanisation bei 180° C Vorteile hinsichtlich Zugfestigkeit, Spannungswert und Härte.

Beispiel 4

zeigt die Überlegenheit von drei erfindungsgemäßen Kombinationen aus o-Nitrophenyl-tert.-butylsulfenamid mit den Sulfenamidbeschleunigern CBS (System 2), TBBS (System 3) und MBS (System 4) mit einem konventionellen semi-efficient-System auf Basis CBS allein. Die Kautschukvormischung war die gleiche wie in Beispiel 1 angegeben. Die Schwefelmenge betrug jeweils 1,42 phr in allen Systemen.

| System | | 1 | 2 | 3 | 4 |
|---|---|---|---|---|---|
| CBS | phr | 1,2 | 1,7 | - | - |
| TBBS | " | - | - | 1,7 | - |
| MBS | " | - | - | - | 1,7 |
| o-Nitrophenyl-tert.-butyl-sulfenamid | " | - | 2,0 | 2,0 | 2,0 |
| Reversion nach 45 Min./180° C (%) | | 29,8 | 0 | 0 | 2,7 |
| Anvulkanisationszeit $t_2$/130° C (Min.) | | 11,7 | 10,5 | 11,3 | 13,2 |
| Spannungswert $M_{300}$ nach 30 Min./150° C (MPa) | | 13,7 | 13,4 | 15,3 | 14,7 |
| Spannungswert $M_{300}$ nach 45 Min./180° C (MPa) | | 9,9 | 14,1 | 15,8 | 14,8 |

Beispiel 5

gibt die Reversion in % nach Übervulkanisation bei 180° C/45 Min. wieder, die in der gleichen Kautschukmischung wie in Beispiel 1 angegeben erhalten wurden. Verwendet wurden die unter den Nummern 5, 6, 15, 17, 19, 20, 21, 24, 25 und 26 auf den Seiten 8 und 9 genannten Verbindungen (jeweilige Menge: 2 phr) in Kombination mit 1,2 phr MBS. Die Schwefelmenge betrug jeweils 1,42 phr. Als Vergleich dient ein konventionelles semi-efficient-System aus Schwefel und MBS (1,2 phr) allein.

| | Reversion (%) nach 45 Min./180 °C |
|---|---|
| MBS | 40,5 |
| Substanz-Nr.: | |
| 5 | 17 |
| 6 | 8 |
| 15 | 14 |
| 17 | 17 |
| 19 | 11 |
| 20 | 10 |
| 21 | 7 |
| 24 | 9 |
| 25 | 23,5 |
| 26 | 23 |

Tabelle 1

| | | System 1*) | System 2 | System 3 | System 4 |
|---|---|---|---|---|---|
| Schwefel | phr | 1,42 | 1,42 | 1,42 | 1,42 |
| MBS | " | 1,2 | 4,0 | - | 2,0 |
| o-Nitrophenyl-tert.-butylsulfenamid | " | - | - | 4,0 | 2,0 |
| Gesamtmenge Beschleuniger | phr | 1,2 | 4,0 | 4,0 | 4,0 |
| Reversion (%) nach 45 Min./180 °C | (%) | 40,4 | 14,7 | vernetzt nach! (<0%) | 5,9 |
| Anvulkanisationszeit $t_s$/130 °C | (Min.) | 22,1 | 17 | 45 | 19,9 |
| Ausvulkanisationszeit $t_{90}$/150 °C | " | 11,4 | 10,4 | 23,1 | 10,3 |
| Reaktionszeit $t_{90}$-$t_s$/150 °C | " | 6,1 | 5,7 | 21,1 | 5,6 |
| Spannungswert-maximum $M_{300}$ bei 150 °C | (MPa) | 15,1 | 19,1 | 6,8 | 15,3 |
| Zugfestigkeit F nach 30 Min./150 °C | " | 21,7 | 18,0 | 11,9 | 22,2 |
| Bruchdehnung D nach 30 Min./150 °C | " | 435 | 310 | 485 | 455 |
| Härte H nach 30 Min./150 °C | " | 70 | 77 | 57 | 71 |
| Elastizität E nach 30 Min./150 °C | " | 39 | 35 | 32 | 37 |

*) Vergleichsversuch

## Ansprüche

1. Verfahren zur Vulkanisation von Kautschuken unter Verwendung eines Schwefel-Vulkanisiersystems, dadurch gekennzeichnet, daß das Schwefel-Vulkanisiersystem
a) 1 bis 3 phr Schwefel oder
2 bis 6 phr Schwefelspender,
b) 0,3 bis 4 phr eines Nitrogruppen-freien Sulfenamidbeschleunigers aus der Reihe
Benzothiazyl-2-cyclohexylsulfenamid (CBS)
Benzothiazyl-2-tert.-butylsulfenamid (TBBS)
N-Morpholinothio-2-benzothiazol (MBS)
Benzothiazyl-2-diisopropylsulfenamid (DIBS)
Benzothiazyl-2-tert.-amylsulfenamid (AMZ)
Benzothiazyl-dicyclohexylsulfenamid(DCBS)
Morpholino-thiocarbonyl-sulfenmorpholid (OTOS),
c) 0,5 bis 4 phr eines o-Nitrophenylsufenamids aus der Reihe der Verbindungen mit den Formeln

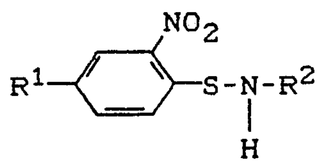

(I)

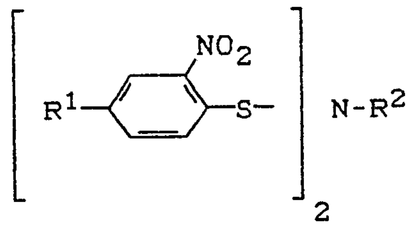

(II)

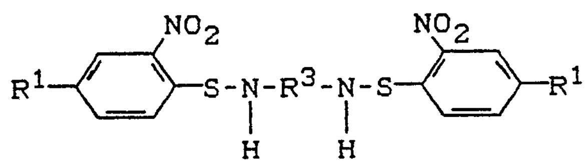

(III)

worin unabhängig voneinander
$R^1$ H, $NO_2$
$R^2$ $C_1$-$C_6$ Alkyl, gegebenenfalls mit $C_1$-$C_4$-Alkyl substituiertes Phenyl, Trihalogen-$C_1$-$C_6$-alkyl; $C_5$-$C_{10}$-Cycloalkyl, gegebenenfalls substituiert mit $C_1$-$C_4$-Alkyl bzw. Trihalogenmethyl;
$R^3$ $C_1$-$C_8$-Alkylen, $C_1$-$C_{10}$-Cycloalkylen, gegebenenfalls mit $C_1$-$C_4$-Alkyl oder Trihalogenmethyl substituiertes Arylen
bedeuten, und gegebenenfalls
d) übliche Vulkanisationshilfsmittel
enthält.

2. o-Nitrophenylsulfenamide der Formel

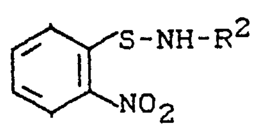

(IV)

dadurch gekennzeichnet, daß der Substituent $R^2$ tert.-Butyl, tert.-Amyl, 1,1,1-Trifluorethyl oder 4-Trifluormethylcyclohexyl ist.

3. Verfahren zur Herstellung der o-Nitrophenylsulfenamide c) aus Anspruch 1 aus o-Nitrophenylsulfenylchlorid

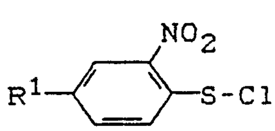

(V)

und Amin $R^2$-$NH_2$ bzw. Diamin $NH_2$-$R^3$-$NH_2$, wobei die Reste $R^1$ bis $R^3$ die in Anspruch 1 angegebene Bedeutung besitzen,
dadurch gekennzeichnet, daß man eine Lösung des o-Nitrophenylsulfenylchlorids in einem inerten organischen mit Wasser nicht mischbaren Lösungsmittel in Gegenwart von
(I) 1 bis 1,1 Mol Amin $R^2$-$NH_2$ oder
(II) 0,5 bis 0,55 Mol Amin $R^2$-$NH_2$ oder

(III) 0.5 bis 0.55 Mol Diamin $NH_2$-$R^3$-$NH_2$
- jeweils pro Mol Sulfenylchlorid V -
und von wäßriger Lösung von 1 bis 10 val Alkali-oder Erdalkalihydroxid, -carbonat oder -hydrogencarbonat pro Mol abzuspaltendem Chlorwasserstoff,
bei Temperaturen von -10 bis 40° C umsetzt, die organische Phase abtrennt und aus dieser das Sulfenamid c) isoliert.

Europäisches Patentamt

# EUROPÄISCHER RECHERCHENBERICHT

Nummer der Anmeldung

EP 88 11 1580

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 460 393 (P.T. PAUL)<br>* Ansprüche 13,14; Spalte 2, Zeile 18 *<br>--- | 1 | C 08 K 5/44<br>C 08 L 21/00<br>C 07 C 145/02 |
| X | EP-A-0 018 620 (BAYER)<br>* Anspruch 1; Seite 35, Zeile 9 *<br>--- | 1 | |
| A | J. AM. CHEM. SOC., Band 61, September 1939, Seiten 2340-2341; J.H. BILLMANN et al.: "The use of O-nitrobenzenesulfenyl chloride in the identification of amines"<br>* Insgesamt *<br>----- | | |

RECHERCHIERTE SACHGEBIETE (Int. Cl.4)

C 08 K
C 08 L
C 07 C

Der vorliegende Recherchenbericht wurde für alle Patentansprüche erstellt

| Recherchenort | Abschlußdatum der Recherche | Prüfer |
|---|---|---|
| DEN HAAG | 04-11-1988 | VAN HUMBEECK F.W.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Grunden angeführtes Dokument

& : Mitglied der gleichen Patentfamilie, übereinstimmendes Dokument

EPO FORM 1503 03.82 (P0403)